# EUROPÄISCHE PATENTANMELDUNG

(11) **EP 0 959 327 A2**
(43) Veröffentlichungstag der Anmeldung: **24.11.1999**
(21) Anmeldenummer: 99103852.2
(22) Anmeldetag: 27.02.1999
(51) Int. Cl.: G01C 21/20

(54) **Einrichtung zur grafischen Markierung eines Strassenverlaufs unter Zuhilfenahme einer Ortsdatenbank**

(30) Priorität: 22.05.1998 DE 19822918
(71) Anmelder: ROBERT BOSCH GMBH, 70442 Stuttgart (DE)
(72) Erfinder: Kynast, Andreas, 31139 Hildesheim (DE)

(57) **Zusammenfassung**

Bei einer Einrichtung zur grafischen Markierung des Verlaufs einer Straße zwischen zwei Orten in einer Straßenkarte liegt die Straßenkarte als Rasterbild vor. Die Lage der beiden Orte auf dem Rasterbild wird mit Hilfe einer Ortsdatenbank ermittelt. In einem ersten Suchlauf werden, ausgehend von einem ersten der beiden Orte, alle diejenigen Straßenverläufe und Verzweigungen auf der Straßenkarte verfolgt, die vorgegebene Eigenschaften aufweisen, solange, bis der zweite Ort erreicht ist. Daran anschließend wird in einem zweiten Suchlauf, ausgehend von dem zweiten Ort, der Verlauf der Straße zurückverfolgt. Dabei wird an jeder Verzweigung in diejenige Richtung weitergesucht, aus der die Verzweigung beim ersten Suchlauf zuerst erreicht wurde, solange, bis der erste Ort wieder erreicht wird. Aus dem im zweiten Suchlauf durchlaufenen Straßenverlauf wird eine grafische Darstellung erzeugt.

## Beschreibung

Die Erfindung betrifft eine Einrichtung zur grafischen Markierung des Verlaufs einer Straße zwischen zwei Orten in einer Straßenkarte.

In bekannten Verkehrsfunksystemen werden zusätzlich zu den Rundfunkprogrammen unhörbar Verkehrsinformationen und andere Meldungen übertragen. Ein solches System ist das Radio-Daten-System (RDS), bei dem eine zusätzliche und unhörbare Übermittlung von digitalen Daten parallel zu Rundfunkprogrammen in einem Datenkanal erfolgt. Spezifikationen des Radio-Daten-Systems für UKW-Hörfunk sind unter anderem in der Druckschrift Tech. 3244 - E, März 1984 der europäischen Runfunk-Union (EBU) festgelegt. Rundfunkempfänger mit geeigneten RDS-Decodern können übermittelte Daten zusätzlich zum Rundfunkempfang mit dem selben Empfangsteil aufnehmen und decodieren. Die Datenübertragung erfolgt in 32 Gruppen zu jeweils 108 Bit, wobei jeder Gruppe ein bestimmter Dienst zugewiesen wird. Die Gruppe 8a ist zur Übertragung von digital codierten Verkehrsmeldungen vorgesehen.

Der Aufbau und die Codierung dieser Verkehrsmeldungen sind in dem Normvorschlag ALERT C, November 1990, herausgegeben vom RDS ATT ALERT Konsortium, im einzelnen festgelegt. Die wesentlichen Elemente einer Verkehrsmeldung sind dabei der Ort des Geschehens (Location) und das Ereignis (Event). Diese Angaben sind katalogisiert, das heißt, daß jedem verkehrsrelevanten Ort und jedem verkehrsrelevanten Ereignis ein eindeutiger Code zugewiesen ist. Die Verkettung der Orte in einer Ortsdatenbank entlang existierender Straßen gibt den Verlauf wieder. Außer den üblichen Einrichtungen eines Empfangsgerätes mit einem RDS-Decoder sind zur Nutzung des Verkehrsmeldungskanals TMC (TMC = Traffic-Message-Channel) Einrichtungen zur Decodierung, zur Speicherung, zur Weiterverarbeitung und zur Ausgabe der Verkehrsmeldungen erforderlich.

Für eine grafische Ausgabe betroffener Straßenabschnitte auf einem Bildschirm im Fahrzeug benötigte man bisher sehr große oder teure Datenbanken, die im Gerät vorgehalten werden müssen. Eine andere Möglichkeit ist die Verwendung von Vektorbildern, die aber sehr rechenintensive Auswerteverfahren nach sich ziehen und ebenfalls teuer sind.

Die zur Decodierung im TMC-System verwendeten Ortsdatenbanken sind vehältnismäßig klein und können die Koordinaten und bestimmte andere Daten von markanten Orten des Straßennetzes enthalten, so daß damit die grafische Darstellung des Verlaufs einer Straße nicht möglich ist.

Aufgabe der vorliegenden Erfindung ist es, eine Einrichtung anzugeben, die auf der Basis kostengünstiger und handlicher Datengrundlagen ohne die Anwendung einer extrem großen Datenbank eine Straße zwischen markanten Orten des Straßennetzes in kurzer Zeit grafisch darstellt.

Erfindungsgemäß wird diese Aufgabe dadurch gelöst, daß die Straßenkarte als Rasterbild (Bitmap) vorliegt, daß die Lage der beiden Orte auf dem Rasterbild mit Hilfe einer Ortsdatenbank ermittelt wird, daß in einem ersten Suchlauf, ausgehend von einem ersten der beiden Orte, alle diejenigen Straßenverläufe und Verzweigungen auf der Straßenkarte verfolgt werden, die vorgegebene Eigenschaften aufweisen, solange, bis der zweite Ort erreicht ist, daß daran anschließend in einem zweiten Suchlauf, ausgehend von dem zweiten Ort, der Verlauf der Straße zurückverfolgt wird und dabei an jeder Verzweigung in diejenige Richtung weitergesucht wird, aus der die Verzweigung beim ersten Suchlauf zuerst erreicht wurde, solange, bis der erste Ort wieder erreicht wird und daß aus dem im zweiten Suchlauf durchlaufenen Straßenverlauf eine grafische Darstellung erzeugt wird.

In einer ersten Ausgestaltung der Erfindung ist vorgesehen, daß die Ortsdatenbank eine TMC-Datenbank ist. Derartige Datenbanken sind zur Decodierung der im TMC übertragenen digital codierten Verkehrsmeldungen erforderlich und können in der Einrichtung verwendet werden.

In einer anderen Ausgestaltung der Erfindung ist vorgesehen, daß die Straßenverläufe anhand vorher bestimmter Eigenschaften der Rasterpunkte des Rasterbildes identifiziert werden. Damit kann die Einrichtung unabhängig von weiteren Daten nur anhand des Rasterbildes die Straßenverläufe suchen.

Eine nächste erfindungsgemäße Ausgestaltung sieht vor, daß vor dem ersten Suchlauf ein Zähler gesetzt wird, daß ein erster Endpunkt betrachtet wird und den Zählerwert erhält, daß in einem ersten Suchlauf zu dem gerade betrachteten Rasterpunkt A alle angrenzenden Rasterpunkte (2) gefunden werden und daß auf diese die folgenden Schritte angewendet werden:
a) alle diejenigen Rasterpunkte werden ausgesucht, die vorgegebene Eigenschaften aufweisen,
b) davon werden alle diejenigen Rasterpunkte ausgesucht, die Rasterpunkt A am nächsten liegen,
c) davon werden alle diejenigen Rasterpunkte (B, C) ausgesucht, die noch keinen Zählerwert haben,
d) jeder der übriggebliebenen Rasterpunkte (B, C) erhält den gleichen aktuellen Zählerwert; der Zähler wird anschließend erhöht,
e) falls der zweite Ort (O2) unter den verbliebenen Rasterpunkten ist, wird der Suchlauf hier abgebrochen, ansonsten wird für jeden der in d) genannten Rasterpunkte der erste Suchlauf erneut durchlaufen.
Dieser Ablauf ist schnell und mit geringem Rechenaufwand durchführbar.

Bei einer anderen erfindungsgemäßen Ausgestaltung ist vorgesehen, daß in dem zweiten Suchlauf zu einem gerade betrachteten Rasterpunkt A alle angrenzenden Rasterpunkte gelesen werden und daß derjenige dieser Rasterpunkte markiert wird, dessen Zählerwert der kleinste von allen ist und daß, falls der erste Ort nicht der markierte Rasterpunkt ist, für den gerade markierten Rasterpunkt der zweite Suchlauf erneut durchgeführt wird. Auch dieser Vorgang ist schnell und braucht nicht viel Rechenleistung.

Eine weitere erfindungsgemäße Ausgestaltung weist die folgenden Schritte auf:
a) die Lage der beiden Orte auf dem Rasterbild der Straßenkarte wird mit Hilfe einer Ortsdatenbank bestimmt; die beiden dort liegenden Rasterpunkte werden als Endpunkte vermerkt, es wird ein inkrementierbarer Zähler festgelegt und ein erster der beiden Endpunkte wird geladen,
b) vorgegebene Eigenschaften aller derjenigen Rasterpunkte, die unmittelbar an den gerade geladenen Rasterpunkt angrenzen, werden gelesen,
c) diejenigen Rasterpunkte werden zwischengemerkt, deren vorgegebenen Eigenschaften denen des Rasterpunktes in b) in vorgegebenem Maße ähneln,
d) von den zwischengemerkten Rasterpunkten werden diejenigen mit dem aktuellen Zählerwert versehen, die dem Rasterpunkt in b) am nächsten liegen und die noch keinen Zählerwert haben,
e) falls sich der zweite Endpunkt nicht unter den in d) gefundenen Rasterpunkten befindet, wird nacheinander jeder der in d) gefundenen Rasterpunkte geladen und es wird jeweils bei b) fortgefahren, anderenfalls wird der zweite Endpunkt geladen,
f) es werden die Zählerwerte aller derjenigen Rasterpunkte gelesen, die an den gerade geladenen Rasterpunkt angrenzen,
g) derjenige Rasterpunkt aus allen in f) gelesenen mit dem kleinsten Zählerwert wird geladen und markiert,
h) falls der geladene Rasterpunkt nicht der erste Endpunkt ist, wird bei f) fortgefahren, anderenfalls bei i),
i) aus allen markierten Rasterpunkten wird eine grafische Darstellung des Straßenzuges erzeugt.

In einer nächsten Ausgestaltung der Erfindung ist vorgesehen, daß eine der vorher bestimmten Eigenschaften die Farbe der Rasterpunkte ist, die den Straßenverlauf auf dem Rasterbild wiedergeben. Damit kann das Suchverfahren beispielsweise Straßen von Feldwegen unterscheiden und berücksichtigt nur die relevanten Straßen.

Eine Weiterbildung der Erfindung sieht vor, daß in einer gegebenen Straßenkarte mögliche Straßenverläufe berechnet, in einem Speicher abgelegt und für eine spätere Darstellung bereitgehalten werden. Damit läßt sich der Vorgang noch weiter beschleunigen, da die gewünschte Grafik nicht bei jedem Abruf neu erstellt werden muß.

In einer anderen erfindungsgemäßen Weiterbildung ist vorgesehen, daß für verschiedene Teilabschnitte eines Straßenverlaufs unterschiedliche Eigenschaften der Rasterpunkte für die Straßenverfolgung vorgegeben werden. So können beispielsweise auch Routen gesucht werden, die verschiedene Straßenarten beinhalten.

Eine nächste Weiterbildung sieht vor, daß die markierten Rasterpunkte durch benachbarte Rasterpunkte ergänzt werden, um die den Straßenzug darstellende Linie zu verbreitern.

Ein Ausführungsbeispiel der Erfindung ist anhand mehrerer Figuren dargestellt und in der nachfolgenden Beschreibung näher erläutert. Es zeigt:
- Fig. 1: den ersten Suchlauf,
- Fig. 2: das Suchmuster um einen einzelnen Rasterpunkt herum beim ersten Suchlauf,
- Fig. 3: das Ergebnis des ersten Suchlaufs,
- Fig. 4: den zweiten Suchlauf und
- Fig. 5: das Endergebnis.

Gleiche Teile sind in den Figuren mit gleichen Bezugszeichen versehen. Die dargestellten Rastermuster symbolisieren Ausschnitte des behandelten Rasterbildes.

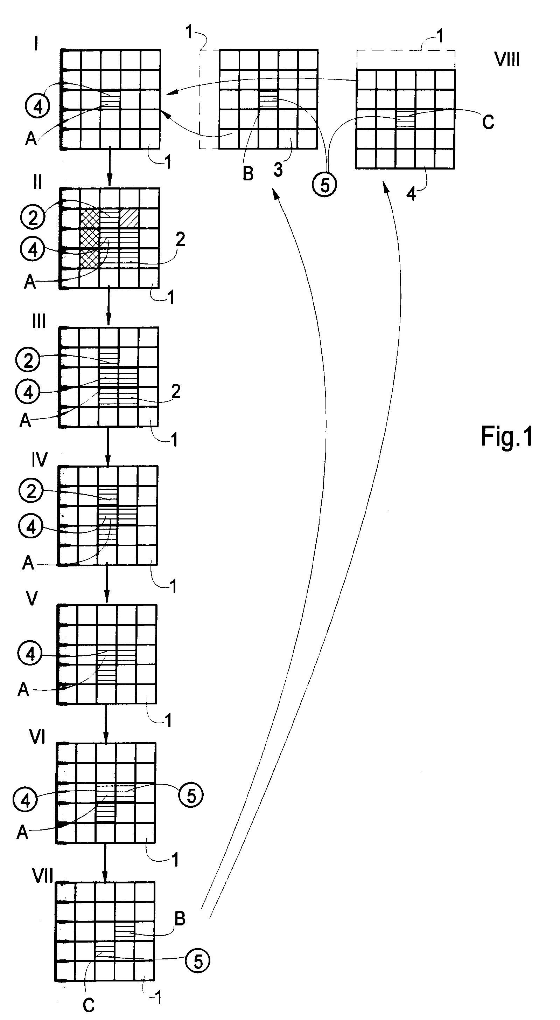

In Fig. 1 ist der Vorgang dargestellt, der während des ersten Suchlaufs in der erfindungsgemäßen Einrichtung abläuft. Die Rasterpunkte - im folgenden auch Punkte genannt - des Rasterbildes 1 werden durch Quadrate symbolisiert. Die für den jeweils betrachteten Schritt relevanten Punkte sind mit einem Muster gefüllt; jedes Muster steht stellvertretend für die Farbe des Punktes. In den kleinen Kreisen, die an manche Punkte angebunden sind, sind die Zählerwerte der jeweiligen Punkte notiert; Punkte ohne Kreis haben keinen Zählerwert. Der gesamte Vorgang läuft in einer Wiederholungsschleife ab, die ausgehend von dem ersten Ort für jeden behandelten Rasterpunkt entlang eines verfolgten Straßenzuges einmal durchlaufen wird und beim Erreichen des zweiten Ortes beendet wird. Diese Schleife ist in Fig. 1 dargestellt. Der gerade behandelte Punkt ist als Punkt A bezeichnet.

Im Schritt I wird ein Rasterpunkt A geladen. Ausgehend von diesem gerade geladenen Punkt A werden in einem Schritt II alle angrenzenden Punkte 2 gelesen. Im nächsten Schritt III werden aus diesen alle Punkte (horizontal schraffiert) herausgesucht, deren Farbe mit der des Punktes A übereinstimmt. In einem weiteren Schritt IV werden davon diejenigen herausgesucht, die dem Punkt A am nächsten liegen. Alle diejenigen Punkte aus dieser Menge, die schon einen Zähler haben, werden in Schritt V aussortiert. In Schritt VI erhalten die restlichen Punkte B und C den aktuellen Zählerwert zugewiesen; der Zähler wird danach inkrementiert (nicht dargestellt). Die verbleibenden Punkte B und C werden in Schritt VII markiert. Abschließend wird gefragt, ob einer der Punkte B oder C der zweite Ort ist. Wenn nicht, dann wird die Schleife für jeden Punkt B, C der Menge neu durchlaufen (siehe Schritt VIII), ansonsten wird der Vorgang beendet.

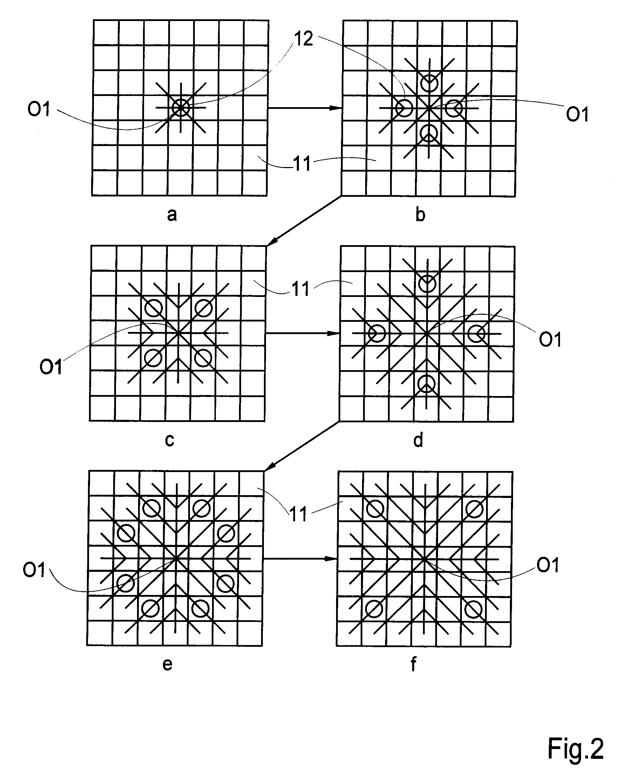

Fig. 2 zeigt das sternförmige Suchmuster, das sich während des ersten Suchlaufs auf dem Rasterbild 11 ergibt. Die Entwicklung des Suchmusters ist in den Diagrammen a bis f fortlaufend dargestellt. Die mit Kreisen markierten Punkte 12 werden in dem jeweiligen Zustand behandelt, falls sie bei der Vorauswahl nach Fig. 1 nicht aussortiert wurden. Im Zustand a wird die Schleife der Fig. 1 zum ersten Mal durchlaufen. Fällt ein Punkt 12 bei der Vorauswahl durch den vorhergehenden Schleifendurchlauf heraus, so wird der gesamte ihm folgende Teil des Suchmusters vernachlässigt. Dies ist keine Vorgabe in der erfindungsgemäßen Einrichtung, sondern die direkte Folge der Schritte aus Fig. 1.

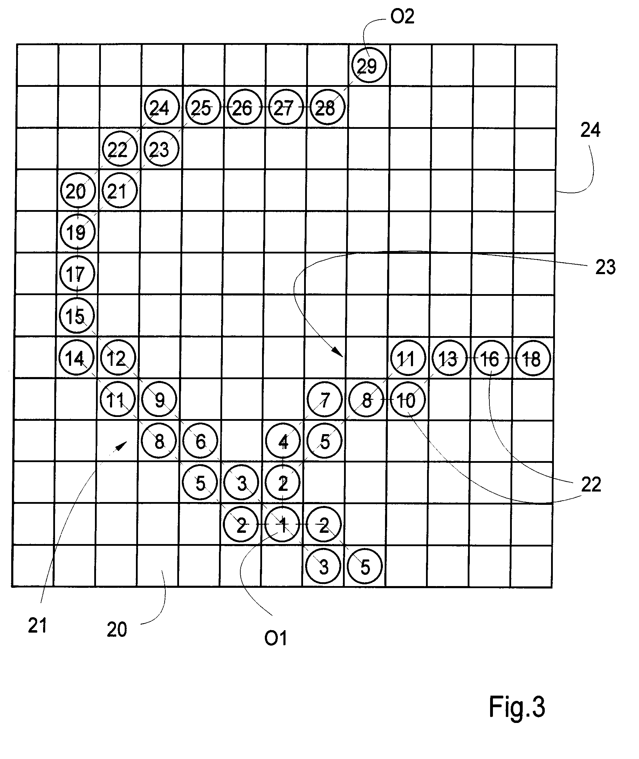

In Fig. 3 ist das Ergebnis des ersten Suchlaufs für den Ausschnitt einer Straßenkarte 20 mit einem Straßenverlauf 21 dargestellt. Alle markierten Punkte 22 sind durch Kreise dargestellt. Die Zählerwerte der Punkte sind in den Kreisen vermerkt. Der erste Ort O1 hat den kleinsten Zählerwert (1), der zweite Ort O2 den größten (29). Die Verzweigung 23 nach rechts wurde bis zum Punkt (18) am rechten Bildrand 24 verfolgt. Sie wird im zweiten Suchlauf ausgefiltert.

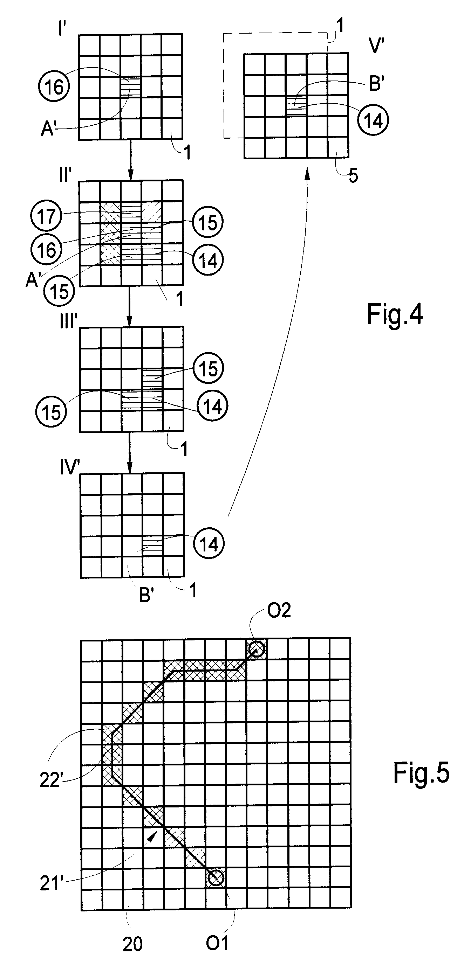

Die Schleife des zweiten Suchlaufs, mit dessen Hilfe der richtige aus den aufgefundenen Straßenzügen der Fig. 3 herausgefiltert wird, ist in Fig. 4 dargestellt. Zu einem Punkt A, der im Schritt I' geladen wird, werden in einem Schritt II' alle angrenzenden Punkte gelesen. Davon werden im Schritt III' alle diejenigen Punkte herausgesucht, deren Zählerwerte kleiner als der des Punktes A sind und im Schritt IV' davon wiederum derjenige mit dem kleinsten Zählerwert dieser Menge. Dieser Punkt B' wird markiert. Ist es der erste Ort O1, wird der Vorgang beendet, ansonsten wird die Schleife mit dem Punkt B' neu durchlaufen.

Fig. 5 zeigt schließlich das Endergebnis des zweiten Suchlaufs und den Verlauf der grafischen Markierung 21' der Straße, die aus der Menge der markierten Punkte 22' erzeugt wurde. Um eine bessere Darstellung zu erhalten, kann die Straße auch mit dickeren Linien markiert werden.

## Patentansprüche

1. Einrichtung zur grafischen Markierung des Verlaufs einer Straße (21') zwischen zwei Orten (O1, O2) in einer Straßenkarte (20), dadurch gekennzeichnet,
- daß die Straßenkarte (20) als Rasterbild vorliegt,
- daß die Lage der beiden Orte (O1, O2) auf dem Rasterbild (20) mit Hilfe einer Ortsdatenbank ermittelt wird,
- daß in einem ersten Suchlauf, ausgehend von einem ersten (O1) der beiden Orte (O1, O2), alle diejenigen Straßenverläufe und Verzweigungen auf der Straßenkarte (20) verfolgt werden, die vorgegebene Eigenschaften aufweisen, solange, bis der zweite Ort (O2) erreicht ist,
- daß daran anschließend in einem zweiten Suchlauf, ausgehend von dem zweiten Ort (O2), der Verlauf der Straße (21') zurückverfolgt wird und dabei an jeder Verzweigung (23) in diejenige Richtung weitergesucht wird, aus der die Verzweigung (23) beim ersten Suchlauf zuerst erreicht wurde, solange, bis der erste Ort (O1) wieder erreicht wird und
- daß aus dem im zweiten Suchlauf durchlaufenen Straßenverlauf (21') eine grafische Darstellung erzeugt wird.

2. Einrichtung nach Anspruch 1, dadurch gekennzeichnet, daß die Ortsdatenbank eine TMC-Datenbank (Traffic Message Channel) ist.

3. Einrichtung nach einem der vorhergehenden Ansprüche, dadurch gekennzeichnet, daß die Straßenverläufe anhand vorher bestimmter Eigenschaften der Rasterpunkte des Rasterbildes identifiziert werden.

4. Einrichtung nach einem der vorhergehenden Ansprüche, dadurch gekennzeichnet, daß vor dem ersten Suchlauf ein Zähler gesetzt wird, daß ein erster Endpunkt betrachtet wird und den Zählerwert erhält, daß in einem ersten Suchlauf zu dem gerade betrachteten Rasterpunkt A alle angrenzenden Rasterpunkte (2) gefunden werden und daß auf diese die folgenden Schritte angewendet werden:
a) alle diejenigen Rasterpunkte werden ausgesucht, die vorgegebene Eigenschaften aufweisen,
b) davon werden alle diejenigen Rasterpunkte ausgesucht, die Rasterpunkt A am nächsten liegen,
c) davon werden alle diejenigen Rasterpunkte (B, C) ausgesucht, die noch keinen Zählerwert haben,
d) jeder der übriggebliebenen Rasterpunkte (B, C) erhält den gleichen aktuellen Zählerwert; der Zähler wird anschließend erhöht,
e) falls der zweite Ort (O2) unter den verbliebenen Rasterpunkten ist, wird der Suchlauf hier abgebrochen, ansonsten wird für jeden der in d) genannten Rasterpunkte der erste Suchlauf erneut durchlaufen.

5. Einrichtung nach einem der vorhergehenden Ansprüche, dadurch gekennzeichnet,
daß in dem zweiten Suchlauf zu einem gerade betrachteten Rasterpunkt A alle angrenzenden Rasterpunkte gelesen werden und
daß derjenige dieser Rasterpunkte (B') markiert wird, dessen Zählerwert der kleinste von allen ist und
daß, falls der erste Ort (O1) nicht der markierte Rasterpunkt (B') ist, für den gerade markierten Rasterpunkt (B') der zweite Suchlauf erneut durchgeführt wird.

6. Einrichtung nach Anspruch 1, gekennzeichnet durch die folgenden Schritte:
a) die Lage der beiden Orte (O1, O2) auf dem Rasterbild (20) der Straßenkarte wird mit Hilfe einer Ortsdatenbank bestimmt; die beiden dort liegenden Rasterpunkte (O1, O2) werden als Endpunkte (O1, O2) vermerkt, es wird ein inkrementierbarer Zähler festgelegt und ein erster der beiden Endpunkte (O1) wird geladen,
b) vorgegebene Eigenschaften aller derjenigen Rasterpunkte (2), die unmittelbar an den gerade geladenen Rasterpunkt (A) angrenzen, werden gelesen, c) diejenigen Rasterpunkte werden zwischengemerkt, deren
vorgegebenen Eigenschaften denen des Rasterpunktes (A) in b) in vorgegebenem Maße ähneln,
d) von den zwischengemerkten Rasterpunkten werden diejenigen (B, C) mit dem aktuellen Zählerwert versehen, die dem Rasterpunkt (A) in b) am nächsten liegen und die noch keinen Zählerwert haben,
e) falls sich der zweite Endpunkt (O2) nicht unter den in d) gefundenen Rasterpunkten (B, C) befindet, wird nacheinander jeder der in d) gefundenen Rasterpunkte (B, C) geladen und es wird jeweils bei b) fortgefahren, anderenfalls wird der zweite Endpunkt (O2) geladen,
f) es werden die Zählerwerte aller derjenigen Rasterpunkte gelesen, die an den gerade geladenen Rasterpunkt (A') angrenzen,
g) derjenige Rasterpunkt (B') aus allen in f) gelesenen mit dem kleinsten Zählerwert wird geladen und markiert,
h) falls der geladene Rasterpunkt nicht der erste Endpunkt ist, wird bei f) fortgefahren, anderenfalls bei i),
i) aus allen markierten Rasterpunkten (22') wird eine grafische Darstellung (21') des Straßenzuges erzeugt.

7. Einrichtung nach einem der vorhergehenden Ansprüche, dadurch gekennzeichnet, daß eine der vorher bestimmten Eigenschaften die Farbe der Rasterpunkte ist, die den Straßenverlauf (21) auf dem Rasterbild (20) wiedergeben.

8. Einrichtung nach einem der vorhergehenden Ansprüche, dadurch gekennzeichnet, daß in einer gegebenen Straßenkarte (20) mögliche Straßenverläufe berechnet, in einem Speicher abgelegt und für eine spätere Darstellung bereitgehalten werden.

9. Einrichtung nach einem der vorhergehenden Ansprüche, dadurch gekennzeichnet, daß für verschiedene Teilabschnitte eines Straßenverlaufs unterschiedliche Eigenschaften der Rasterpunkte für die Straßenverfolgung vorgegeben werden.

10. Einrichtung nach einem der vorhergehenden Ansprüche, dadurch gekennzeichnet, daß die markierten Rasterpunkte durch benachbarte Rasterpunkte ergänzt werden, um die den Straßenzug darstellende Linie zu verbreitern.
